# EUROPEAN PATENT APPLICATION

(11) **EP 4 803 214 A1**
(43) Date of publication of application: **09.09.2026**
(21) Application number: 25730559.9
(22) Date of filing: 14.01.2025
(51) Int. Cl.: B05D 7/24, B05D 7/04, B05D 1/28, B32B 33/00, B32B 7/12

(54) **FLOOR TILE HAVING TRANSFERRED GLAZE COATING LAYER AND MANUFACTURING METHOD THEREFOR**

(71) Applicant: Banfert New Materials Co., Ltd., Changsha, Hunan 410625 (CN)
(72) Inventor: LI, Xinxiong, Changsha, Hunan 410625 (CN); LI, Hui, Changsha, Hunan 410625 (CN); ZHANG, Dongming, Changsha, Hunan 410625 (CN)
(74) Representative: Wächter, Jochen
(86) International application number: PCT/CN2025/072238
(87) International publication number: WO 2026/152256

(57) **Abstract**

The present disclosure relates to the technical field of decorative materials, and in particular to a floor tile with a transferred glaze coating layer and a preparation method thereof. Provided is a method for preparing the floor tile with the transferred glaze coating layer, including: firstly applying a glaze coating onto a surface of a transfer film, and conducting a first curing to form a glaze coating layer, thereby obtaining a glaze transferring film; and secondly applying an adhesive layer onto a surface of a pretreated substrate, applying the glaze transferring film onto a surface of the adhesive layer, conducting a second curing, and then removing the transfer film to obtain the floor tile with the transferred glaze coating layer. The glaze coating layer is first applied on the transfer film, and then is used to prepare the floor tile. One side of the glaze coating layer in contact with the transfer film is isolated from oxygen during curing, without the influence of oxygen polymerization inhibition. Wear resistant particles are concentrated on the one side with the transfer film. Moreover, the mirror characteristics of the transfer film create a mirror coating layer, endowing the glaze coating layer with excellent wear resistance, scratch resistance, and mirror finish.

## Description

### TECHNICAL FIELD

The present disclosure relates to the technical field of decorative materials, and in particular to a floor tile with a transferred glaze coating layer and a preparation method thereof.

### BACKGROUND

Floor decoration materials need to withstand long-term trampling, scraping, friction, and other effects, therefore, floor decoration materials have strict requirements for such as wear resistance and scratch resistance. Among various floor decoration materials, ceramic tile and marble have excellent waterproofness, corrosion resistance, wear resistance and easy to clean due to their composition of inorganic materials and unique firing process, and could also achieve mirror-smooth finish. However, ceramic tiles also have some shortcomings that have been criticized, such as high specific gravity, easy breakage, difficult to cut, high installation and transportation costs, cold and hard foot feel, and high production energy consumption.

Plastic floor and inorganic board are inexpensive, environmentally friendly, and easy to recycle, and have gradually become the mainstream of decorative materials in recent years. These materials all require the application of a coating on the surface to provide wear resistance, scratch resistance, and better decorative effects. However, it is often difficult to achieve both a mirror-smooth finish and excellent wear resistance and scratch resistance at the same time. The related technologies disclose a composite floor and a preparation method thereof, which can achieve a mirror-smooth finish and excellent wear resistance and scratch resistance. However, this process needs to prepare a coating layer on a polymer film and then stick a resulting material to a substrate, which is relatively complicated and cannot be produced in a continuous line. Moreover, the product line involves materials such as substrates, coatings, polymer films, and the like, resulting in higher overall costs. In addition, limited by the polymer film, the resulting composite floor has low hardness.

### SUMMARY

In view of this, an object of the present disclosure is to provide a floor tile with a transferred glaze coating layer and a preparation method thereof. The floor tile prepared by the preparation method shows smooth glaze surface, excellent wear resistance and scratch resistance, and high hardness.

The present disclosure provides a method for preparing a floor tile with a transferred glaze coating layer, including:
firstly applying a glaze coating onto a surface of a transfer film, and conducting a first curing to form a glaze coating layer, thereby obtaining a glaze transferring film; and
secondly applying an adhesive layer onto a surface of a pretreated substrate, applying the glaze transferring film onto a surface of the adhesive layer, conducting a second curing, and then removing the transfer film to obtain the floor tile with the transferred glaze coating layer.

In some embodiments, the glaze coating includes the following raw materials: in parts by mass, 5 parts to 50 parts of wear resistant particles, 10 parts to 80 parts of an acrylate resin, 1 part to 5 parts of a photoinitiator, 0 to 50 parts of an active diluent, and 0.1 parts to 5 parts of an auxiliary agent.

In some embodiments, the wear resistant particles each have a Mohs hardness of not less than 9; and
the wear resistant particles include micron particles, and the micron particles include at least one selected from the group consisting of alumina, zirconium carbide, silicon carbide, boron carbide, silicon nitride, boron nitride, and a diamond micropowder.

In some embodiments, the glaze coating is applied with an applying amount of 3 g/m² to 20 g/m².

In some embodiments, the transfer film includes one selected from the group consisting of a polyester film, a polypropylene film, and a polyethylene film.

In some embodiments, the transfer film has a thickness of 20 microns to 500 microns.

In some embodiments, the first curing is performed by a radiation curing, and the radiation curing is conducted by using one selected from the group consisting of a gallium lamp, a mercury lamp, a UV-LED (ultraviolet light emitting diode) lamp, a halogen lamp, and an electrodeless lamp.

In some embodiments, the pretreatment substrate includes one selected from the group consisting of a first pretreatment substrate, a second pretreatment substrate, and a third pretreatment substrate, where
the first pretreatment substrate includes a first substrate, a first primer layer, a covering white base layer, a pattern layer, and a second primer layer which are stacked in sequence, and the first substrate includes one selected from the group consisting of a plastic board, an inorganic board, a wooden board, and a composite board;
the second pretreatment substrate includes a plastic substrate with a polymer white film, a pattern layer, an adhesion primer layer, and a wear resistant base layer which are stacked in sequence; or the second pretreatment substrate includes a plastic substrate with a polymer printing film, the adhesion primer layer, and the wear resistant base layer which are stacked in sequence; and
the third pretreatment substrate is a composite plastic substrate, and the composite plastic substrate includes a plastic substrate, a printing film, and a transparent film which are stacked in sequence.

In some embodiments, the adhesive layer is one selected from the group consisting of a transparent UV (ultraviolet) coating layer and a transparent adhesive layer.

The present disclosure further provides a floor tile with a transferred glaze coating layer prepared by the method as described in the above technical solutions.

Compared with the prior art, some embodiments of the present disclosure have the following beneficial effects:
The present disclosure provides a method for preparing a floor tile with a transferred glaze coating layer, including: firstly applying a glaze coating onto a surface of a transfer film, and conducting a first curing to form a glaze coating layer, thereby obtaining a glaze transferring film; and secondly applying an adhesive layer onto a surface of a pretreated substrate, applying the glaze transferring film onto a surface of the adhesive layer, conducting a second curing, and then removing the transfer film to obtain the floor tile with the transferred glaze coating layer. The glaze coating is first applied onto the transfer film and the glaze coating layer is then transferred to the floor tile. The side of the glaze coating layer in contact with the transfer film is isolated from oxygen during curing, without the influence of oxygen polymerization inhibition. Wear resistant particles are concentrated on the side with the transfer film. Moreover, the mirror characteristics of the transfer film create a mirror coating layer, which shows excellent wear resistance, scratch resistance, and mirror finish. Moreover, the method is not restricted by the film transfer process, allowing for the application of coating layers with higher hardness on the pretreated substrate, so that the floor tile obtained shows high hardness. The floor tile with the transferred glaze coating layer shows excellent wear resistance and scratch resistance, and has broad application prospects, making it suitable for use in fields such as garages, floors, and other major commerce environments. Moreover, the method is simple, with energy consumption much lower than that required for the production and manufacturing cost of ceramic tiles, enabling continuous production on different substrates, and preparing floor decoration materials with a ceramic tile effect.

### DETAILED DESCRIPTION OF THE EMBODIMENTS

The present disclosure provides a method for preparing a floor tile with a transferred glaze coating layer, including:
firstly applying a glaze coating onto a surface of a transfer film, and conducting a first curing to form a glaze coating layer, thereby obtaining a glaze transferring film; and
secondly applying an adhesive layer onto a surface of a pretreated substrate, applying the glaze transferring film onto a surface of the adhesive layer, conducting a second curing, and then removing the transfer film to obtain the floor tile with the transferred glaze coating layer.

In the present disclosure, unless otherwise specified, all materials and equipment used are commercially available products in the art.

In the present disclosure, a glaze coating is applied onto a surface of a transfer film, and a first curing is conducted to form a glaze coating layer, thereby obtaining a glaze transferring film.

In some embodiments, the transfer film includes one selected from the group consisting of a polyethylene terephthalate (PET) film, a polypropylene (PP) film, and a polyethylene (PE) film. In some embodiments, the transfer film has a thickness of 20 µm to 500 µm, preferably 30 µm to 200 µm, and specifically 70 µm or 100 µm. In the present disclosure, the smooth mirror surface characteristics of the transfer film is utilized , resulting in that the transferred glaze coating layer achieves a mirror finish comparable to ceramic tiles. The transfer film could be selected with different gloss levels and textures, thereby enabling the transferred glaze coating layer to achieve various gloss levels and texture effects.

In some embodiments, the glaze coating includes the following raw materials: in parts by mass, 5 parts to 50 parts of wear resistant particles, 10 parts to 80 parts of an acrylate resin, 1 part to 5 parts of a photoinitiator, 0 to 50 parts of an active diluent, and 0.1 parts to 5 parts of an auxiliary agent.

In some embodiments, the acrylate resin includes 10 wt% to 100 wt% of a high-functionality acrylate resin, and the high-functionality acrylate resin preferably has a functionality of 2 to 15, and specifically 9; and the high-functionality acrylate resin preferably includes at least one selected from the group consisting of polyurethane acrylate resin, epoxy acrylate resin, and polyester acrylate resin.

In some embodiments, the wear resistant particles each have a Mohs hardness of not less than 9. In some embodiments, the wear resistant particles include micron particles, and the micron particles include at least one selected from the group consisting of alumina, zirconium carbide, silicon carbide, boron carbide, silicon nitride, boron nitride, and a diamond micropowder, specifically is a mixture of the diamond micropowder, a silicon carbide micropowder, and an alumina micropowder; in some embodiments, a mass ratio of the diamond micropowder, the silicon carbide micropowder, and the alumina micropowder is 1:1:2. In some embodiments, the wear resistant particles each have a particle size of 1 µm to 30 µm, preferably 3 µm to 20 µm, and specifically 10 µm. The particle size range of the wear resistant particles could ensure good transparency and high volume concentration of the wear resistant particles. After the transfer process, wear resistant particles are concentrated on the surface of the glaze coating layer with a mirror finish.

In some embodiments, the wear resistant particles further include nano particles, and a mass percentage of the nano particles in the glaze coating is in a range of 0.5% to 10%, specifically is 3%; in some embodiments, the nano particles include at least one selected from the group consisting of alumina, zirconium carbide, silicon carbide, boron carbide, silicon nitride, boron nitride, and a diamond nano powder; and in some embodiments, the nano particles each have a particle size of 20 nm to 300 nm. In the present disclosure, nano particles and micro particles are used together to allow that the coating shows excellent wear resistance.

In some embodiments, the nano particles are used in a form of a nano hybrid resin; and the nano hybrid resin includes the following raw materials: in parts by mass, 60 parts to 90 parts of a photocurable resin, 5 parts to 30 parts of the nano particles, and 0.5 parts to 10 parts of a silane coupling agent, and specifically includes 82 parts of the photocurable resin, 15 parts of the nano particles, and 3 parts of the silane coupling agent; the photocurable resin is preferably epoxy acrylate resin TUE21 from Banfert New Materials Co., Ltd., China, the nano particles are preferably Aladdin wear resistant alumina with a particle size of 50 nm, and the silane coupling agent is preferably Dow Corning 6011.

In some embodiments, the photoinitiator is one selected from the group consisting of photoinitiator 184 (1-hydroxycyclohexyl phenyl ketone) and photoinitiator 1173 (2-hydroxy-2-methyl-1-phenyl-1-acetone).

In some embodiments, the active diluent is DPGDA (dipropylene glycol diacrylate).

In some embodiments, the auxiliary agent includes at least one selected from the group consisting of a dispersant, a defoamer, and an anti-settling assistant, the dispersant is preferably BASF EFKA-AFCONA-4010, the defoamer is preferably Digo TEGO Airex 920, the anti-settling assistant is preferably fumed silica, and the fumed silica is preferably Degussa R974.

In some embodiments, the glaze coating includes the following raw materials: in parts by mass, 15 parts of the wear resistant particles, 55 parts of the acrylate resin, 3 parts of the photoinitiator, 26 parts of the active diluent, and 1 part of the auxiliary agent, where the auxiliary agent includes 0.4 parts of the dispersant, 0.2 parts of the defoamer, and 0.4 parts of the anti -settling assistant; or includes the following raw materials: in parts by mass, 20 parts of the wear resistant particles, 37 parts of the acrylate resin, 20 parts of the nano hybrid resin, 2 parts of the photoinitiator, 20 parts of the active diluent, and 1 part of the auxiliary agent, where the auxiliary agent includes 0.4 parts of the dispersant, 0.2 parts of the defoamer, and 0.4 parts of the anti-settling assistant.

In some embodiments, the glaze coating is applied with an applying amount of 3 g/m² to 20 g/m², preferably 5 g/m² to 15 g/m², and specifically 8 g/m².

In some embodiments, the method further includes before applying the glaze coating, applying a release agent onto the surface of the transfer film. In the present disclosure, there is no special requirement on the type and applying amount of the release agent, what is commonly used by those skilled in the art could be adopted. The release agent is used to make the subsequent stripping of the transfer film convenient.

In the present disclosure, there is no special requirement for means for applying the glaze coating, and common means used by those skilled in the art may be adopted.

In some embodiments, the first curing is performed by a radiation curing, and in some embodiments, the radiation curing is conducted by using one selected from the group consisting of a gallium lamp, mercury lamp, a UV-LED (ultraviolet light emitting diode) lamp, a halogen lamp, and an electrodeless lamp. The side of the glaze coating layer that contacts with the transfer film is isolated from oxygen during curing, thus eliminating the influence of oxygen polymerization inhibition and greatly increasing the crosslinking density. Wear resistant particles are concentrated on the side with the transfer film, which, after transfer, become the glaze coating layer of the floor tile, possessing excellent wear resistance and scratch resistance. Moreover, the mirror characteristics of the transfer film create a mirror coating layer.

In the present disclosure, the method further includes after conducting the first curing to form the glaze coating layer, applying a second adhesive layer onto a surface of the glaze coating layer.

In the present disclosure, after a glaze transferring film is obtained, an adhesive layer is applied onto a surface of a pretreated substrate, the glaze transferring film is applied onto a surface of the adhesive layer, a second curing is conducted, and then the transfer film is removed to obtain the floor tile with the transferred glaze coating layer.

In some embodiments, the pretreatment substrate includes one selected from the group consisting of a first pretreatment substrate, a second pretreatment substrate, and a third pretreatment substrate, and the first pretreatment substrate includes a first substrate, a first primer layer, a covering white base layer, a pattern layer, and a second primer layer which are stacked in sequence, and the first substrate includes one selected from the group consisting of a plastic board, an inorganic board, a wooden board, and a composite board.

In some embodiments, the plastic board includes one selected from the group consisting of a PVC (polyvinyl chloride) board, a PET (polyethylene terephthalate) board, a PETG (polyethylene terephthalate-1,4-cyclohexanedimethylene terephthalate) board, and a PP (polypropylene) board, and the PVC board preferably includes one selected from the group consisting of an SPC (stone plastic composite) board and a WPC (wood plastic composite) board; and the inorganic board preferably includes one selected from the group consisting of a calcium silicate board, a phosphorus magnesium board, a glass magnesium board, a yanmu board, and a cement fiberboard; and the wooden board preferably includes one selected from the group consisting of a solid wood board and a multilayer solid wood composite board.

In some embodiments, a primer for the first primer layer includes one selected from the group consisting of an adhesion primer and a penetration primer; under a condition that the first substrate is the plastic board or the wooden board with good surface strength, a surface of the first substrate is preferably coated with the adhesion primer; and under a condition that the first substrate is the inorganic board with poor surface strength and high porosity, the surface of the first substrate is preferably coated with the penetration primer to strengthen the surface, and the penetration primer is preferably a dual-curing penetration primer, the dual-curing penetration primer preferably has the characteristics of UV curability and reaction ability in isocyanate-hydroxyl addition polymerization reaction. The UV coating has the advantages of fast curing speed and high-speed continuous production, but the UV coating after penetrating into the pores of the substrate could not be cured by ultraviolet light. The two-component polyurethane coating has a reaction characteristic of isocyanate-hydroxyl addition polymerization reaction, which has excellent waterproof, impact resistance, wear resistance, and other properties, but requires high temperature baking or long-term curing to cross-link and react, resulting in low production efficiency. The dual-curing penetration primer has the characteristics of deep penetration, continuous production, and excellent surface modification and strengthening effect on the substrate.

In some embodiments, the pattern layer is obtained by digital printing, and a ink for the digital printing preferably includes one selected from the group consisting of a UV ink, a water-based ink, and a solvent-based ink.

In some embodiments, a primer for the second primer layer is a wear resistant base; and in some embodiments, the wear resistant base is a wear resistant base with high hardness; and in some embodiments, the wear resistant base includes 5% to 60% of an inorganic powder by mass, and the inorganic powder has a Mohs hardness of not less than 6 and a particle size of 3 µm to 100 µm, and the inorganic powder includes at least one selected from the group consisting of a glass powder, a silicon micropowder, a quartz powder, alumina, zirconium carbide, silicon carbide, boron carbide, silicon nitride, boron nitride, and diamond, and more preferably is alumina. In some embodiments, the wear resistant base is applied with an applying amount of 10 g/m² to 200 g/m², preferably 20 g/m²to 150 g/m².

In some embodiments, the first primer layer, the covering white base layer, the pattern layer, and the second primer layer are independently applied for at least one time, specifically, once or twice; and an applying amount for each applying is preferably 5 g/m² to 150 g/m², specifically is 10 g/m², 20 g/m², 25 g/m², 40 g/m², or 80g/m²; and in some embodiments, after each applying, curing is conducted, and the curing is performed by a gallium lamp curing and a mercury lamp curing.

In some embodiments, the method further includes providing a putty-filled layer between the first primer layer and the covering white base layer; and providing an adhesion primer layer between the covering white base layer and the pattern layer to ensure good bonding between the layers.

In some embodiments, the second pretreatment substrate includes a plastic substrate with a polymer white film, a pattern layer, an adhesion primer layer, and a wear resistant base layer which are stacked in sequence; or a plastic substrate with a polymer printing film, an adhesion primer layer, and a wear resistant base layer which are stacked in sequence. One side of the polymer white film of the plastic substrate with the polymer white film is contacted with the pattern layer.

In some embodiments, the third pretreatment substrate is a composite plastic substrate, and the composite plastic substrate includes a plastic substrate, a printing film, and a transparent film which are stacked in sequence; and in some embodiments, the plastic substrate is an SPC substrate. The glaze coating layer is transferred onto the side with the transparent film. In some embodiment, the transparent film is also provided with the adhesion primer and the wear resistant base to ensure good adhesion, wear resistance, and scratch resistance of the coating layer.

In some embodiments, the adhesive layer is one selected from the group consisting of a transparent UV coating layer and a transparent adhesive layer; and the transparent UV coating layer preferably includes the following raw materials: 10 wt% to 80wt% of a high-Tg (Glass Transition Temperature) monomer, and the high-Tg monomer having a Tg of not less than 40°C; and/or 10wt% to 80wt% of an acrylic resin, the acrylic resin having a functionality of not less than 2, and the acrylic resin includes at least one selected from the group consisting of polyurethane acrylic resin, polyester acrylic resin, and epoxy acrylic resin. In some embodiments, the transparent adhesive layer is formed from a transparent PUR (Polyurethane Reactive) adhesive or a transparent two-component polyurethane adhesive.

In the present disclosure, the glaze transferring film is applied onto the surface of the adhesive layer, the non-carrier film side of the glaze transferring film contacts the adhesive layer on the surface of the pretreated substrate, in other words , the glaze coating layer contacts the adhesive layer on the surface of the pretreated substrate, or the second adhesive layer on the surface of the glaze coating layer contacts the adhesive layer on the surface of the pretreated substrate.

In some embodiments, the second curing is conducted by using at least one selected from the group consisting of a gallium lamp, a mercury lamp, a UV-LED lamp, a halogen lamp, an electrodeless lamp, and an EB (Electron Beam) curing.

In some embodiments, the method further includes after removing the transfer film, conducting a third curing to the glaze coating layer, and the third curing is conducted preferably by using at least one selected from the group consisting of a gallium lamp, a mercury lamp, a UV-LED lamp, a halogen lamp, an electrodeless lamp, and an EB curing.

In some embodiments, the method further includes after removing the transfer film, conducting a coating layer treatment on the back of the floor tile, and then slicing and grooving; in some embodiments, the coating layer treatment is conducted by adopting UV back coating, so as to achieve the purposes of beauty, waterproofness, and balancing the shrinkage of the front coating.

In the present disclosure, the method for preparing the floor tile with the transferred glaze coating layer is simple, allows for continuous production to prepare the floor decoration material with high hardness, excellent wear resistance and scratch resistance, and a mirror finish, achieving the purpose of replacing the ceramic tile.

The present disclosure further provides a floor tile with a transferred glaze coating layer prepared by the method as described in the above technical solutions.

In the present disclosure, the floor tile with the transferred glaze coating layer could achieve the effect of ceramic tile, and could be applied to plastic floor, especially SPC board or WPC board, combining the high-grade mirror finish, dirt resistance, wear resistance, and scratch resistance of ceramic tile with the advantages of easy to cut, easy installation and transportation, and comfortable foot feeling of plastic floor, without the defects of ceramic tile, such as easy breakage, high transportation and installation cost, and hard foot feeling, nor the shortcomings of plastic floor, such as poor wear resistance and scratch resistance of surface; and when applied to inorganic board, it could also achieve the effect of replacing ceramic tile, which has the advantages of light weight and inexpensiveness compared with ceramic tile.

In the present disclosure, the method requires only one production line, where after filling and leveling the substrate and creating patterns, the glaze coating layer is then transferred, and these steps are directly connected in the production line to obtain the finished product, making the process simpler.

In order to further illustrate the present disclosure, the floor tile with the transferred glaze coating layer and the preparation method thereof are described in detail with examples, but they could not be understood as limiting the scope of the present disclosure.

### Example 1

A method for preparing a floor tile with a transferred glaze coating layer was performed as follows:
1. A calcium silicate board was polished and levelled, and then penetration primer BMZ-5100 was applied thereon with an applying amount of 40 g/m², and cured by using gallium lamp; and then filler putty BMZ-3016 was applied thereon twice, each applying with an applying amount of 25 g/m², and cured by using mercury lamp after each applying; and then covering white base BMZ-824WH was applied thereon twice, each applying with an applying amount of 20 g/m², and cured by using the gallium lamp after each applying; and then digital printing was conducted thereon to obtain a pattern layer, and then adhesion primer BMZ-855 was applied thereon with an applying amount of 10 g/m² and cured by using the mercury lamp; and then wear resistant base BMZ-323C was applied thereon with an applying amount of 80 g/m², and cured by using the mercury lamp to obtain a pretreated substrate.
   Where, digital printing was conducted by using UV ink LUS-210 from Shenzhen Xinghe Lianhui Digital Technology Co., Ltd., China; BMZ-5100, BMZ-3016, BMZ-824WH, BMZ-855, and BMZ-323C were all from Banfert New Materials Co., Ltd., China; and there were 30wt% of alumina (with a particle size of 40 µm, from Zhengzhou Yuechi Abrasive and Abrasive Co., Ltd., China) in the wear resistant base BMZ-323C.
2. A glaze coating layer was transferred on the pretreated substrate. The steps for transferring the glaze coating layer were as follows: a UV wear resistant coating layer was applied onto a transfer film and a first radiation curing was conducted by using the gallium lamp. An adhesive layer was applied onto the pretreated substrate without curing, a resulting transfer film with the UV wear resistant coating applied thereon and cured was applied onto the adhesive layer, and the UV wear resistant coating layer was contacted with the adhesive layer. A second radiation curing was conducted by using the gallium lamp, then the transfer film was removed. A third radiation curing was conducted by using the gallium lamp to form the glaze coating layer with excellent wear resistance and scratch resistance, thereby obtaining a floor tile after applying.

The transfer film was a PET film with a thickness of 70 µm from Anhui Ocan Materials Co., Ltd., China. The UV wear resistant coating layer was applied with an applying amount of 8 g/m², and the UV wear resistant coating layer consisted of the following raw materials (in parts by mass): 15 parts of wear resistant particles, 55 parts of an acrylate resin, 3 parts of a photoinitiator, 26 parts of an active diluent, and 1 part of an auxiliary agent. The wear resistant particles were diamond micropowder with a particle size of 10 µm from Boron Ultrahard Materials Co., Ltd., China. The acrylate resin was a polyurethane acrylate with a functionality of 9, model TUN142, from Banfert New Materials Co., Ltd.,China. The photoinitiator was 184 (1-hydroxycyclohexyl phenyl ketone) and the active diluent was DPGDA (dipropylene glycol diacrylate). The auxiliary agent consisted of 0.4 parts of a dispersant, 0.2 parts of a defoamer, and 0.4 parts of an anti-settling assistant, where the dispersant was BASF EFKA -AFCONA-4010, the defoamer was Digo TEGO Airex 920, and the anti-settling assistant was a fumed silica, which was Degussa R974.

The adhesive layer was a transparent UV coating layer with high hardness, which consisted of, by mass percentage: 40% of DPGDA (dipropylene glycol diacrylate) (with a Tg of 104°C), 40% of a polyurethane acrylate with a functionality of 6, 3% of a photoinitiator, and 17% of the polyurethane acrylate with a functionality of 2. The polyurethane acrylate with the functionality of 6 was TUN153 from Banfert New Materials Co., Ltd.,China. The photoinitiator consisted of 1% of TPO and 2% of 184. The polyurethane acrylate with a functionality of 2 was TUN102 from Banfert New Materials Co., Ltd., China.

Coating layer treatment was conducted on the back of the floor tile after applying to achieve beautiful and waterproof effects, where BMZ-820 from Banfert New Materials Co., Ltd., China was applied with an applying amount of 30 g/m², then cured by using the mercury lamp, and the floor tile after applying was then sliced and grooved, to obtain the floor tile with the transferred glaze coating layer.

### Example 2

A method for preparing a floor tile with a transferred glaze coating layer was performed as follows:
1. An SPC substrate was polished and levelled, and then adhesion primer BPVC-1335 was applied thereon with an applying amount of 10 g/m², and cured by using mercury lamp; and then covering white base BMZ-824WH was applied thereon twice, each applying with an applying amount of 20 g/m², and cured by using gallium lamp after each applying; and then digital printing was conducted thereon to obtain a pattern layer, and then adhesion primer BMZ-855 was applied thereon with an applying amount of 10 g/m² and cured by using the mercury lamp; and then wear resistant base BMZ-323C was applied thereon with an applying amount of 80 g/m², and cured by using the mercury lamp to obtain a pretreated substrate.
   BPVC-1335 was from Banfert New Materials Co., Ltd., China.
2. The steps and raw materials for transferring the glaze coating layer were the same as those in Example 1.

Coating layer treatment was conducted on the back of the floor tile after applying to balance the shrinkage of the front coating, where BPVC-1625-15 from Banfert New Materials Co., Ltd, China was applied with an applying amount of 50 g/m², then cured by using the mercury lamp, and the floor tile after applying was then sliced and grooved, to obtain the floor tile with the transferred glaze coating layer.

### Example 3

A method for preparing a floor tile with a transferred glaze coating layer was performed as follows:
Digital printing was conducted on the side of a PVC white film on an SPC substrate with the PVC white film to obtain a pattern layer, and then adhesion primer BPVC-1335 was applied thereon with an applying amount of 10 g/m² and cured by using mercury lamp; and then wear resistant base BMZ-323C was applied thereon with an applying amount of 80 g/m², and cured by using the mercury lamp to obtain a pretreated substrate.

The SPC substrate with the PVC white film was prepared by pasting the PVC white film online while extruding the SPC substrate, which was from Zhejiang Yongyu Household Co., Ltd., China.

2. The steps and raw materials for transferring the glaze coating layer were the same as those in Example 1.

Coating layer treatment was conducted on the back of the floor tile after applying to balance the shrinkage of the front coating. BPVC-1625-15 from Banfert New Materials Co., Ltd, China was applied with an applying amount of 50 g/m², then cured by using the mercury lamp, and the floor tile after applying was then sliced and grooved, to obtain the floor tile with the transferred glaze coating layer.

### Example 4

A method for preparing a floor tile with a transferred glaze coating layer was performed as follows:
Adhesion primer BPVC-1335 was applied onto an SPC substrate with a PVC printing film with an applying amount of 10 g/m² and cured by using mercury lamp; and then wear resistant base BMZ-323C was applied thereon with an applying amount of 80 g/m², and cured by using the mercury lamp to obtain a pretreated substrate.

The SPC substrate with the PVC printing film was prepared by pasting the PVC printing film online while extruding the SPC substrate, which was from Zhejiang Yongyu Household Co., Ltd.,, China.

2. The steps and raw materials for transferring the glaze coating layer were the same as those in Example 1.

Coating layer treatment was conducted on the back of the floor tile after applying to balance the shrinkage of the front coating. BPVC-1625-15 from Banfert New Materials Co., Ltd, China was applied with an applying amount of 50 g/m², then cured by using the mercury lamp, and the floor tile after applying was then sliced and grooved, to obtain the floor tile with the transferred glaze coating layer.

### Example 5

A method for preparing a floor tile with a transferred glaze coating layer was performed as follows:
Adhesion primer BPVC-1335 was applied onto the side of a transparent film of a composite substrate with a SPC substrate, a PVC printing film, and a PVC transparent film which are stacked in sequence with an applying amount of 10 g/m², and cured by using mercury lamp; and then wear resistant base BMZ-323C was applied thereon with an applying amount of 80 g/m², and cured by using the mercury lamp to obtain a pretreated substrate.

The composite substrate was prepared by pasting the PVC printing film and the PVC transparent film online while extruding the SPC substrate, which was from Zhejiang Yongyu Household Co., Ltd.,, China.

2. The steps and raw materials for transferring the glaze coating layer were the same as those in Example 1.

Coating layer treatment was conducted on the back of the floor tile after applying to balance the shrinkage of the front coating, where BPVC-1625-15 from Banfert New Materials Co., Ltd, China was applied with an applying amount of 50 g/m², then cured by using the mercury lamp, and the floor tile after applying was then sliced and grooved, to obtain the floor tile with the transferred glaze coating layer.

### Example 6

A method for preparing a floor tile with a transferred glaze coating layer was performed as follows:
Adhesion primer BPVC-1335 was applied onto the side of a transparent film of a composite substrate with a SPC substrate, a PVC printing film, and a PVC transparent film which are stacked in sequence with an applying amount of 10 g/m², and cured by using mercury lamp to obtain a pretreated substrate.

The composite substrate was prepared by pasting the PVC printing film and the PVC transparent film online while extruding the SPC substrate, which was from Zhejiang Yongyu Household Co., Ltd.,, China.

2. The steps and raw materials for transferring the glaze coating layer were the same as those in Example 1.

The floor tile after applying was sliced and grooved to obtain the floor tile with the transferred glaze coating layer.

### Example 7

A method for preparing a floor tile with a transferred glaze coating layer was performed as follows:
1. A PET substrate was polished and levelled, and then adhesion primer BPT-2101A was applied thereon with an applying amount of 10 g/m², and cured by using mercury lamp; and then covering white base BMZ-824WH was applied thereon twice, each applying with an applying amount of 20 g/m², and cured by using gallium lamp after each applying; and then digital printing was conducted thereon to obtain a pattern layer, and then adhesion primer BMZ-855 was applied thereon with an applying amount of 10 g/m² and cured by using the mercury lamp; and then wear resistant base BMZ-323C was applied thereon with an applying amount of 80 g/m², and cured by using the mercury lamp to obtain a pretreated substrate.
   BPT-2101A was from Banfert New Materials Co., Ltd., China.
2. The steps and raw materials for transferring the glaze coating layer were the same as those in Example 1.

The floor tile after applying was sliced and grooved to obtain the floor tile with the transferred glaze coating layer.

### Example 8

A method for preparing a floor tile with a transferred glaze coating layer was performed as follows:
1. An SPC substrate was polished and levelled, and then adhesion primer BPVC-1335 was applied thereon with an applying amount of 10 g/m², and cured by using mercury lamp; and then covering white base BMZ-824WH was applied thereon twice, each applying with an applying amount of 20 g/m², and cured by using gallium lamp after each applying; and then digital printing was conducted thereon to obtain a pattern layer, and then adhesion primer BMZ-855 was applied thereon with an applying amount of 10 g/m² and cured by using the mercury lamp; and then wear resistant base BMZ-323C was applied thereon with an applying amount of 80 g/m², and cured by using the mercury lamp to obtain a pretreated substrate.
2. A glaze coating layer was transferred onto the pretreated substrate. The steps for transferring the glaze coating layer were as follows: a UV wear resistant coating layer was applied onto a transfer film and a first radiation curing was conducted by using the gallium lamp. An adhesive layer was applied onto the pretreated substrate without curing, a resulting transfer film with the UV wear resistant coating applied thereon and cured was applied onto the adhesive layer, and the UV wear-resistant coating layer was contacted with the adhesive layer. A second radiation curing was conducted by using the gallium lamp, then the transfer film was removed. A third radiation curing was conducted by using the gallium lamp to form the glaze coating layer with excellent wear resistance and scratch resistance, thereby obtaining a floor tile after applying.

The transfer film was a PET film with a thickness of 100 µm from Anhui Ocan Materials Co., Ltd., China. The UV wear resistant coating was applied with an applying amount of 15 g/m², and the UV wear resistant coating layer consisted of the following raw materials (in parts by mass): 20 parts of wear resistant particles, 37 parts of an acrylate resin, 20 parts of a nano hybrid resin, 2 parts of a photoinitiator, 20 parts of an active diluent, and 1 part of an auxiliary agent. The wear resistant particles consisted of 5 parts of a diamond micropowder, 5 parts of a silicon carbide micropowder, and 10 parts of an alumina micropowder, all with a particle size of 10 µm. The acrylate resin was a polyurethane acrylate with a functionality of 9, model TUN142, from Banfert New Materials Co., Ltd., China. The photoinitiator was 1173 (2-hydroxy-2-methyl-1-phenyl-1-acetone) and the active diluent was DPGDA (dipropylene glycol diacrylate). The auxiliary agent consisted of 0.4 parts of a dispersant, 0.2 parts of a defoamer, and 0.4 parts of an anti-settling assistant, where the dispersant was BASF EFKA-AFCONA-4010, the defoamer was Digo TEGO Airex 920, and the anti-settling assistant was a fumed silica, which was Degussa R974. The nano hybrid resin was obtained by dispersing and coating the nano particles with a photocurable resin through a silane coupling agent; the nano hybrid resin consisted of, in parts by mass, 82 parts of the photocurable resin, 15 parts of the nano particles, and 3 parts of the silane coupling agent, where the photocurable resin was epoxy acrylic resin TUE21 from Banfert New Materials Co., Ltd., China, the nano particles were Aladdin wear resistant alumina with a particle size of 50 nm, and the silane coupling agent was Dow Corning 6011. The adhesive layer was the same as that in Example 1.

Coating layer treatment was conducted on the back of the floor tile after applying to balance the shrinkage of the front coating, where BPVC-1625-15 from Banfert New Materials Co., Ltd, China was applied with an applying amount of 50 g/m², then cured by using the mercury lamp, and the floor tile after applying was then sliced and grooved, to obtain the floor tile with the transferred glaze coating layer.

### Comparative Example 1

The preparation method described in Chinese patent publication CN117230957A, titled "Composite Floor and Preparation Method Thereof" was adopted, in which, the composite floor is obtained by applying a radiation-cured coating layer and a glaze layer onto a transparent film or a polymer composite film with a printing film, and then adhering a resulting material to a substrate by using an adhesive. The preparation method was performed as follows:

A PVC composite film was obtained by thermal bonding of a PVC printing film and a PVC transparent film. A UV wear resistant coating was applied onto a transfer film and a first radiation curing was conducted by using gallium lamp, adhesion primer BPVC-1335 was applied onto a transparent film of the PVC composite film with an applying amount of 10 g/m², and cured by using mercury lamp. Then an adhesive layer was applied thereon without curing, a resulting cured transfer film with the UV wear resistant coating applied thereon and cured was applied onto the adhesive layer, and the UV wear resistant coating layer was contacted with the adhesive layer. A second radiation curing was conducted by using the gallium lamp, then the transfer film was removed. A third radiation curing was conducted by using the gallium lamp to obtain a color functional film. The PVC transparent film had a thickness of 300 µm, which was from Foshan Tianan Plastic Co., Ltd., China. The PVC printing film had a thickness of 100 µm, which was from Hangzhou Lin'an Ginkgo Decorative Materials Co., Ltd., China. The thickness and raw materials for the transfer film and UV wear resistant coating layer were the same as those in Example 1.

The color functional film obtained was applied on a leveled SPC substrate by using PUR adhesive to obtain a composite floor.

### Comparative Example 2

A commercial ceramic tile was adopted.

### Performance test

(1) Hardness: According to GB/T 6739-2022 standard, the hardness of the floor decoration materials obtained in Examples and Comparative Examples was tested. A higher tested data represents a higher hardness.
(2) Impact resistance: According to GB/T 17657-2013 standard, the impact resistance of the floor decoration materials obtained in Examples and Comparative Examples was tested.
(3) Wear resistance: According to GB/T 1768-2006 standard, the wear resistance of the floor decoration materials obtained in Examples and Comparative Examples was tested. The test conditions were: a load of 500 g, P180 sandpaper, and testing the wear value after 100 revolutions of grinding. A smaller wear value represents better wear resistance.
(4) Repetitive traffic scratch resistance: According to the additional test method HSP1305MM of EN 16094-2021, the repetitive traffic scratch resistance of the floor decoration materials obtained in Examples and Comparative Examples was tested, and the evaluation grades ranged from C1 (best) to C5 (worst).

The test results are shown in Table 1:

**Table 1 Test results for the performance of floor decoration materials obtained in Examples and Comparative Examples**

| Test item | Hardness | Impact | Wear resistance | Repetitive traffic scratch |
|---|---|---|---|---|
| | | resistance | (mg) | resistance |
| Example 1 | 6H | Broken | 2.5 | C2 grade |
| Example 2 | 6H | No abnormality | 2.8 | C2 grade |
| Example 3 | 6H | No abnormality | 2.8 | C2 grade |
| Example 4 | 6H | No abnormality | 2.8 | C2 grade |
| Example 5 | 4H | No abnormality | 3.1 | C2 grade |
| Example 6 | 3H | No abnormality | 4.5 | C2 grade |
| Example 7 | 6H | No abnormality | 2.7 | C2 grade |
| Example 8 | 6H | No abnormality | 1.9 | C2 grade |
| Comparative Example 1 | 2H | No abnormality | 4.5 | C2 grade |
| Ceramic tile | 6H | No abnormality | 1.4 | C3 grade |

The substrate of the floor tile in Example 1 is a calcium silicate board, which is an inorganic material like ceramic tile and has the characteristic of being easily broken. However, calcium silicate board has a lower density than ceramic tile, making it easier to transport and install, and the manufacturing process consumes less energy. The composite floor prepared by the method of Comparative Example 1 contains a layer of PVC composite film in the middle. The hardness of the PVC composite film is low, and due to the limitations of the film transfer process, it is impossible to apply a coating with higher hardness. Therefore, the composite floor obtained has low hardness. Repetitive traffic scratches are used to evaluate the scratch resistance of the floor under harsh conditions, specifically evaluate the scratch resistance under high hardness or sharp materials with certain loads. As can be seen from Table 1 that the floor tile with the transferred glaze coating layer prepared by the method of the present disclosure has better scratch resistance than that of the ceramic tile while achieving the mirror finish surface, and the wear resistance is basically close to that of the ceramic tile. Moreover, compared with the process of preparing a glaze surface coating layer on the composite film material and then sticking in Comparative Example 1, the cost of the floor tile in the present disclosure is lower, reducing the cost of film material and process cost, and shows higher hardness, with performance closer to that of ceramic tile.

Although the above embodiments have provided a detailed description of the present disclosure, they are only a part, not all of the embodiments in the present disclosure. Other embodiments could be obtained based on these embodiments without involving inventiveness, which all fall within the scope of the present disclosure.

## Claims

1. A method for preparing a floor tile with a transferred glaze coating layer, comprising:
firstly applying a glaze coating onto a surface of a transfer film, and conducting a first curing to form a glaze coating layer, thereby obtaining a glaze transferring film; and
secondly applying an adhesive layer onto a surface of a pretreated substrate, applying the glaze transferring film onto a surface of the adhesive layer, conducting a second curing, and then removing the transfer film to obtain the floor tile with the transferred glaze coating layer.

2. The method of claim 1, wherein the glaze coating comprises the following raw materials: in parts by mass, 5 parts to 50 parts of wear resistant particles, 10 parts to 80 parts of an acrylate resin, 1 part to 5 parts of a photoinitiator, 0 to 50 parts of an active diluent, and 0.1 parts to 5 parts of an auxiliary agent.

3. The method of claim 2, wherein the wear resistant particles each have a Mohs hardness of not less than 9; and
the wear resistant particles comprise micron particles, and the micron particles comprise at least one selected from the group consisting of alumina, zirconium carbide, silicon carbide, boron carbide, silicon nitride, boron nitride, and a diamond micropowder.

4. The method of claim 3, wherein the wear resistant particles further comprise nano particles, and a mass percentage of the nano particles in the glaze coating is in a range of 0.5% to 10%.

5. The method of claim 4, wherein the nanoparticles are used in a form of a nano hybrid resin; and the nano hybrid resin comprises the following raw materials: in parts by mass, 60 parts to 90 parts of a photocurable resin, 5 parts to 30 parts of the nano particles, and 0.5 parts to 10 parts of a silane coupling agent.

6. The method of claim 2 or 3, wherein the glaze coating is applied with an applying amount of 3 g/m² to 20 g/m².

7. The method of claim 1, wherein the transfer film comprises one selected from the group consisting of a polyester film, a polypropylene film, and a polyethylene film.

8. The method of claim 1 or 7, wherein the transfer film has a thickness of 20 microns to 500 microns.

9. The method of claim 2, wherein the first curing is performed by a radiation curing, and the radiation curing is conducted by using one selected from the group consisting of a gallium lamp, a mercury lamp, a UV-LED (ultraviolet light emitting diode) lamp, a halogen lamp, and an electrodeless lamp.

10. The method of claim 1, wherein the pretreatment substrate comprises one selected from the group consisting of a first pretreatment substrate, a second pretreatment substrate, and a third pretreatment substrate, wherein
the first pretreatment substrate comprises a first substrate, a first primer layer, a covering white base layer, a pattern layer, and a second primer layer which are stacked in sequence, and the first substrate comprises one selected from the group consisting of a plastic board, an inorganic board, a wooden board, and a composite board;
the second pretreatment substrate comprises a plastic substrate with a polymer white film, a pattern layer, an adhesion primer layer, and a wear resistant base layer which are stacked in sequence; or the second pretreatment substrate comprises a plastic substrate with a polymer printing film, the adhesion primer layer, and the wear resistant base layer which are stacked in sequence; and
the third pretreatment substrate is a composite plastic substrate, and the composite plastic substrate comprises a plastic substrate, a printing film, and a transparent film which are stacked in sequence.

11. The method of claim 10, wherein the plastic board for the first substrate comprises one selected from the group consisting of a PVC (polyvinyl chloride) board, a PET (polyethylene terephthalate) board, a PETG (polyethylene terephthalate-1,4-cyclohexanedimethylene terephthalate) board, and a PP (polypropylene) board, and
the inorganic board comprises one selected from the group consisting of a calcium silicate board, a phosphorus magnesium board, a glass magnesium board, a yanmu board, and a cement fiberboard.

12. The method of claim 1, wherein the adhesive layer is one selected from the group consisting of a transparent UV (ultraviolet) coating layer and a transparent adhesive layer.

13. A floor tile with a transferred glaze coating layer prepared by the method of any one of claims 1 to 12.
